# EUROPÄISCHE PATENTSCHRIFT

(11) **EP 2 617 288 B1**
(45) Veröffentlichungstag und Bekanntmachung des Hinweises auf die Patenterteilung: **10.08.2016**
(21) Anmeldenummer: 13151651.0
(22) Anmeldetag: 17.01.2013
(51) Int. Cl.: A22B 3/00

(54) **Verfahren und Anlage zum Betäuben eines Schlachttieres**
Method and system for stunning animals to be slaughtered
Procédé et installation pour étourdir un animal d'abattage

(30) Priorität: 20.01.2012 DE 102012100480
(43) Veröffentlichungstag der Anmeldung: 24.07.2013
(73) Patentinhaber: BANSS SCHLACHT- UND FÖRDERTECHNIK GMBH, 35216 Biedenkopf (DE)
(72) Erfinder: Weide, Harald, 35216 Biedenkopf (DE); Schmidt, Frank, 35232 Dautphetal (DE)
(74) Vertreter: Stoffregen, Hans-Herbert

(56) Entgegenhaltungen:
- WO-A1-94/27425
- DE-B3-102008 003 865
- US-A1- 2006 154 585

## Beschreibung

Die Erfindung bezieht sich auf ein Verfahren zum Betäuben eines Schlachttieres, insbesondere eines Schweins, wobei das Schlachttier durch eine ein erstes Gas enthaltende erste Umgebung gefördert und vorbetäubt und sodann durch eine ein zweites Gas enthaltende zweite Umgebung zum Betäuben gefördert wird, wobei das erste Gas eine von dem zweiten Gas und von Luft abweichende Dichte aufweist.

Auch nimmt die Erfindung Bezug auf eine Anlage zum Betäuben eines Schlachttieres, wie eines Schweins, umfassend eine Fördereinrichtung, die durch eine ein erstes Gas aufweisende erste Umgebung und eine dieser nachgeordnete ein zweites Gas aufweisende zweite Umgebung führt, wobei das erste Gas eine von dem zweiten Gas und von Luft abweichende Dichte aufweist.

Ein Verfahren und eine Vorrichtung der eingangs genannten Art sind der DE-B-10 2008 003 865 zu entnehmen. Als erstes Gas wird Edelgas in Form von Argon benutzt, das - wie das zweite Gas - schwerer als Luft ist. Sowohl das erste als auch das zweite Gas füllen Gruben aus, in denen die Schlachttiere vertikal gestreckt mit dem Kopf nach unten hindurchgefördert werden. Zwischen den das erste und das zweite Gas enthaltenden Gruben sind Schächte angeordnet, in denen die Schlachttiere gespült werden.

Ein zweistufiges Betäuben von Schweinen mit CO₂ und Argon bzw. einem Argon-Stickstoffgemisch ist auch der DE.Z.: Fleischwirtschaft 10/2003, S. 109 (Machold et al.: Gasbetäubung von Schweinen) zu entnehmen.

Durch die Verwendung eines ersten und zweiten Gases werden eine Vorbetäubung und eine Endbetäubung erreicht. Erstere führt dazu, dass bei den zu schlachtenden Tieren Abwehrreaktionen nicht auftreten, wie dies bei der Einwirkung von CO₂ der Fall sein kann.

Weitere Betäubungsanlagen, bei denen CO₂ als Betäubungsgas benutzt wird, sind der DE-B-10 2008 007 114, der DE-U-299 21 214, DE-C-22 21 858 und DE-A-101 14 974 zu entnehmen. Bei Letzteren wird jedoch stets nur ein Gas verwendet. Die Schlachttiere selbst werden in Transportgondeln eingetrieben, die nach dem Pater-Noster-Prinzip durch die mit dem Betäubungsgas gefüllten Gruben geführt werden.

In der WO-A-94/27425 sind mehrere Verfahren zum Betäuben von Geflügel beschrieben. So wird das Geflügel entweder in einem Gas leichter als Luft oder in einem Gas schwerer als Luft oder in einem Gas einer Dichte von in etwa Luft betäubt, aus dem der Sauerstoff entfernt ist. Ein Fördern durch die Gase erfolgt durch mehrere Fördereinrichtungen bzw. einen Karussellförderer.

Der vorliegenden Erfindung liegt die Aufgabe zu Grunde, ein Verfahren und eine Anlage der eingangs genannten Art so weiterzubilden, dass raumsparend und artgerecht ein Vor- und ein Endbetäuben des Schlachttieres ermöglicht wird. Nach einem weiteren Aspekt soll zusätzlich sichergestellt sein, dass die zum Einsatz gelangenden Gase in der vorgesehenen Umgebung verbleiben.

Erfindungsgemäß wird die Aufgabe verfahrensmäßig im Wesentlichen dadurch gelöst, dass das Schlachttier in eine Aufnahme eingetrieben wird, dass die Aufnahme mit dem Schlachttier durch die erste Umgebung zunächst aufwärts und dann abwärts und sodann durch die zweite Umgebung gefördert wird, wobei als erstes Gas ein Gas geringerer Dichte als Luft und als zweites Gas ein Gas höherer Dichte als Luft verwendet wird.

Insbesondere ist vorgesehen, dass das Schlachttier in eine Aufnahme eingetrieben wird, dass die Aufnahme mit dem Schlachttier durch die erste Umgebung mittels einer Fördereinrichtung zunächst aufwärts, sodann mittels der Fördereinrichtung abwärts durch die erste Umgebung und sodann mittels der Fördereinrichtung durch die zweite Umgebung gefördert wird, wobei als ersten Gas ein Gas geringerer Dichte als Luft und als zweites Gas ein Gas höherer Dichte als Luft verwendet wird.

Aufgrund der erfindungsgemäßen Führung des Schlachttiers in der ersten Umgebung, in der das Schlachttier zunächst vertikal aufwärts und dann parallel hierzu vertikal abwärts gefördert wird und in der sich Gas geringerer Dichte als Luft befindet, ist sichergestellt, dass Schlachttiere ausreichend lange dem ersten Gas ausgesetzt werden, ohne dass ein großes Volumen benötigt wird. Das Gas befindet sich in einer Einrichtung, die ausschließlich bodenseitig geöffnet ist, so dass das Gas in der Einrichtung verbleibt.

Durch die Verwendung von insbesondere Ballongas erfolgt während des Transports in der ersten Umgebung ein Sauerstoffentzug für das Schlachttier, ohne dass eine Abwehrreaktion auftritt. Nach Verlassen der ersten Umgebung ist das Schlachttier im erforderlichen Umfang vorbetäubt. Somit entfällt eine Abwehrreaktion beim Eintritt in die vorzugsweise CO₂-Gas enthaltende zweite Umgebung. Infolgedessen sind Schlachtergebnisse erzielbar, bei denen das Fleisch eine hohe Qualität aufweist. Das Auftreten von z. B. sogenannten Blutstippen im Schinken von Schweinen ist nicht feststellbar.

Nach Verlassen der ersten Umgebung wird das Schlachttier bevorzugterweise zunächst abwärts und sodann aufwärts gefördert - und zwar gleichfalls antiparallel -, so dass infolgedessen die erste und zweite Umgebung eine kompakte Einheit bilden. Es wird nur eine relativ geringe Menge an Gas benötigt, um das Vorbetäuben und Endbetäuben durchzuführen. Dabei ist insbesondere vorgesehen, dass das Schlachttier durch die erste Umgebung in einer Zeit t1 mit 60 sec ≤ t1 ≤ 120 sec, insbesondere 80 sec ≤ t1 ≤ 90 sec, und/oder durch die zweite Umgebung in einer Zeit t2 mit 70 sec ≤ t2 ≤ 150 sec, insbesondere 100 sec ≤ t2 ≤ 110 sec, gefördert wird. Dabei sollte die Gesamtbetäubungszeit zwischen 150 sec und 250 sec, vorzugsweise zwischen 180 sec und 190 sec liegen.

Insbesondere und eigenerfinderisch wird ein Verfahren zum Betäuben eines Schlachttieres, insbesondere eines Schweins, wobei das Schlachttier durch eine ein erstes Gas enthaltende erste Umgebung gefördert und vorbetäubt und sodann durch eine ein zweites Gas enthaltende zweite Umgebung zum Betäuben gefördert wird, wobei das erste Gas eine von dem zweiten Gas und von Luft abweichende Dichte aufweist, vorgeschlagen, das sich dadurch auszeichnet, dass das Schlachttier während des Transports durch das erste und zweite Gas irreversibel betäubt wird.

Aufgrund der erfindungsgemäßen Lehre ergeben sich die überraschenden Vorteile, dass das Schlachttier sehr gut ausblutet und die Fleischqualität im Vergleich zu einer CO₂-Betäubung besser ist.

Des Weiteren und zur Vermeidung von unerwünschten Belastungen von Schlachttieren ist vorgesehen, dass eine Aufnahme wie Gondel verwendet wird, in der mehrere Schlachttiere nebeneinander positioniert durch die erste und zweite Umgebung gefördert werden.

Um einen hohen Durchsatz bei gleichzeitig hinreichender Verweildauer in der ersten und zweiten Umgebung sicherzustellen, ist in Weiterbildung vorgesehen, dass die Aufnahme innerhalb der ersten und zweiten Umgebung mit einem ersten Fördermittel und außerhalb der ersten und zweiten Umgebung mit einem zweiten Fördermittel mit einer Geschwindigkeit gefördert wird, die größer als die des ersten Fördermittels ist.

Abweichend von üblichen Betäubungsanlagen werden zur Aufnahme der Gase keine Gruben benutzt, sondern schacht- oder säulenartige Einrichtungen, die vorzugsweise quaderförmig ausgebildet sind, wobei die Einrichtung für das erste Gas umfangsseitig und kopfseitig geschlossen und bodenseitig geöffnet ist und die zweite Einrichtung umfangsseitig und bodenseitig geschlossen und kopfseitig offen ist. Über die entsprechenden Öffnungen werden sodann die Schlachttiere durch das erste bzw. zweite Gas gefördert.

Um dabei sicherzustellen, dass bei den durch das Fördern hervorgerufenen Turbulenzen wenig Gas aus den Einrichtungen austritt, ist in hervorzuhebender Weiterbildung der Erfindung vorgesehen, dass die zweite Einrichtung schacht- oder säulenartig mit vertikaler Erstreckung ausgebildet ist und eine Eintrittsöffnung aufweist, die überlappend zur bodenseitigen Öffnung der ersten Einrichtung verläuft, wobei der Überlappungsbereich von der Fördereinrichtung durchsetzt ist, die ihrerseits im Bodenbereich der zweiten Einrichtung umgelenkt ist.

Ergänzend wird vorgeschlagen, dass der Überlappungsbereich der bodenseitigen Öffnung der ersten Einrichtung fördereinrichtungseintrittsseitig sowohl von der ersten Einrichtung als auch von der zweiten Einrichtung begrenzt ist.

Durch die diesbezüglichen Maßnahmen weist die mit der Umgebung in Verbindung stehende Eintrittsöffnung der ersten Einrichtung bzw. die Austrittsöffnung der zweiten Einrichtung jeweils einen Querschnitt auf, der kleiner als der jeweilige öffnungsseitige Gesamtquerschnitt jeder Einrichtung ist. Dabei wird der Bereich, innerhalb dem die Schlachttiere von der ersten Einrichtung in die zweite Einrichtung übergehen, durch die Einrichtungen selbst begrenzt. Hierzu besteht die Möglichkeit, dass z. B. Wandabschnitte der zweiten Einrichtung in den Innenraum der ersten Einrichtung außerhalb der Eintrittsöffnung, die von der Fördereinrichtung und dem Schlachttier durchsetzt werden, verlaufen. Entsprechend kann sich ein Randabschnitt bzw. eine Begrenzung der ersten Einrichtung zumindest bis zu der Oberfläche des in der zweiten Einrichtung gesammelten Gases erstrecken.

Des Weiteren sieht die Erfindung vor, dass der zweiten Einrichtung fördereinrichtungsaustuttsseitig eine Auswurfeinrichtung für das Schlachttier zugeordnet ist und dass im Bereich der Auswurfeinrichtung die Aufnahme von einem zweiten Fördermittel wie Förderkette erfassbar ist, die zum Eintrittsbereich der ersten Einrichtung führt.

Durch diese Maßnahmen ist sichergestellt, dass die Schlachttiere in der zum Betäuben erforderlichen Zeit durch die erste und zweite Einrichtung gefördert werden, außerhalb dieser jedoch die Schlachttiere mit erhöhter Geschwindigkeit transportiert werden können, um mit relativ wenigen Aufnahmen ein Betäuben der Schlachttiere bei gleichzeitig gewünschtem hohen Durchsatz durchführen zu können. Hierzu kann zwischen dem ersten Fördermittel und dem zweiten Fördermittel eine Transfereinrichtung vorgesehen sein.

In Weiterbildung ist vorgesehen, dass die Aufnahme eine Quaderform mit einer Grundfläche zum Nebeneinanderpositionieren von mehreren Schlachttieren aufweist.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung eines Ausführungsbeispiels.

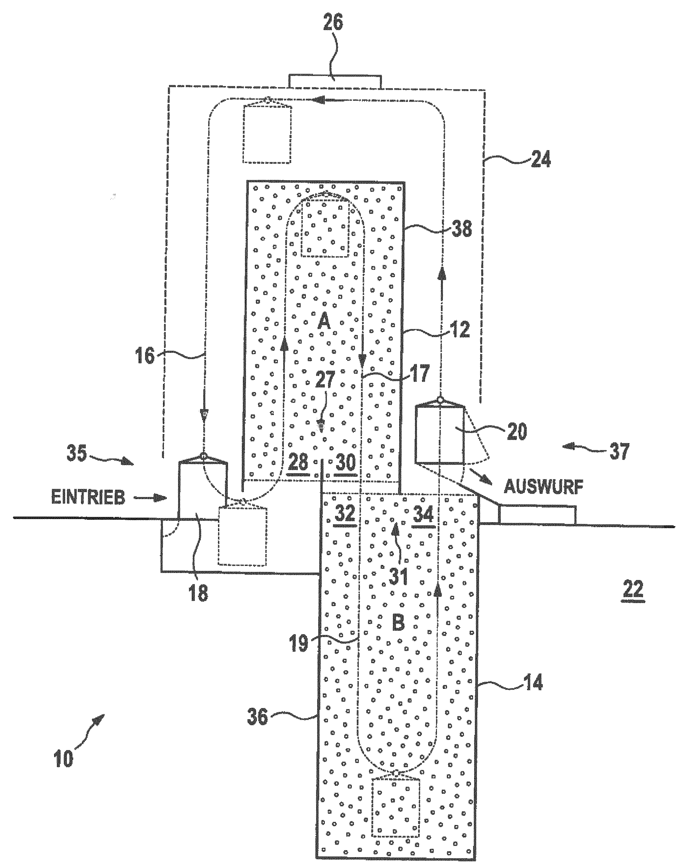

In der einzigen Figur ist eine Prinzipdarstellung einer Betäubungsanlage 10 dargestellt, die eine vorzugsweise eine Quaderform aufweisende schacht- oder säulenförmige erste Einrichtung 12 und eine ebenfalls vorzugsweise schacht- oder säulenförmige, insbesondere auch quaderförmige zweite Einrichtung 14 umfasst. Sowohl die erste als auch die zweite Einrichtung 12, 14 ist jeweils mit einem Betäubungsgas A bzw. B gefüllt. Das Gas A ist leichter als Luft und enthält insbesondere Helium. Das Gas B ist schwerer als Luft und enthält bevorzugterweise CO₂. Des Weiteren ist eine Fördereinrichtung z. B in Form einer Endloskette 16 vorhanden, mittels der Aufnahmen 18, 20 durch die erste und zweite Einrichtung 12, 14 förderbar sind.

Die erste und zweite Einrichtung 12, 14 - nachstehend vereinfacht Schacht genannt - sind in einer Schlachtstraße integriert, wobei der Schacht 14 in einem Boden 22 eingelassen sein kann. Der Schacht 12 ist bevorzugterweise von einem Gehäuse oder Verkleidung 24 umgeben, innerhalb der ein Abschnitt der Endloskette 16 geführt ist. Dabei kann im Kopfbereich des Gehäuses 24 eine Reinigungseinrichtung 26 vorgesehen sein, um vorbeigeförderte Aufnahmen 18, 20 zu reinigen, um also hygienischen Vorschriften zu genügen.

Da das Gas A in dem Schacht 12 leichter als Luft ist, wobei bevorzugterweise ein Ballongas eingesetzt wird, ist dementsprechend der Schacht 12 umfangsseitig und kopfseitig geschlossen. Der Boden ist offen und bevorzugterweise in zwei Bereiche 28, 30 unterteilt, wobei der Bereich 28 Eintrittsöffnung für die Endloskette 16 ist, mit der die Aufnahmen 18, 20 durch den Schacht 12 und damit das Gas A gefördert werden. Der Bereich 30 erstreckt sich unmittelbar oberhalb der kopfseitigen Öffnung 31 des Schachts 14, der umfangsseitig und bodenseitig verschlossen ist. Demzufolge ist die Kopfseite des Schachts 14 gleichfalls in zwei Bereiche unterteilt, nämlich in den mit dem ersten Schacht 12 bzw. dem Bereich 32 der Öffnung überlappenden Bereich 32 und den Bereich 34, der gleichzeitig Austrittsöffnung aus dem Schacht 14 ist, der also von der Endloskette 16 durchsetzt wird, um die Aufnahmen 18, 20 aus dem Schacht 14 herauszufördern.

Durch das Überlappen der Öffnungen 27, 31, also der überlappten Bereiche 30, 32 wird der Querschnitt der jeweiligen Öffnung 27 bzw. 31 verkleinert mit der Folge, dass im Übergangsbereich zwischen dem Schacht 12 zu dem Schacht 14, also im Überlappungsbereich 30, 32, das Gas grundsätzlich nicht an die Umgebung strömen kann. Hierzu ist zusätzlich vorgesehen, dass von dem Schacht 14 ein Abschnitt der in der Zeichnung linken Wandung 36 sich in den Innenraum des Schachtes 12 in einem Umfang erstreckt, dass dieser von dem Gas A umgeben ist. Entsprechend kann die in der Zeichnung rechte Wandung 38 des Schachtes 12 zumindest bis zur Oberfläche des Gases B verlaufen.

Der Überlappungsbereich wird von der Endloskette 16 mit den Aufnahmen 18, 20 wie Gondeln durchsetzt.

Aus der zeichnerischen Darstellung ergibt sich des Weiteren, dass die Kette 16 im Kopfbereich des Schachtes 12 und im Bodenbereich des Schachtes 14 umgelenkt wird. Somit durchlaufen die Aufnahmen 18, 20 den Schacht 12 zunächst vertikal aufwärts und dann vertikal abwärts und umgekehrt den Schacht 14 zunächst vertikal abwärts und sodann vertikal aufwärts. Hiermit ist die Transportstecke innerhalb der Schächte 12, 14 relativ lang, ohne dass ein großes Volumen benötigt wird.

Ferner ergibt sich aus der Zeichnung, dass der abwärtsgerichtete Transportabschnitt 17 in dem Schacht 12 und der abwärtsgerichtete Transportabschnitt 19 in dem Schacht 14 eine gemeinsame Gerade bilden.

Bei den Aufnahmen 18, 20 handelt es sich insbesondere um quaderförmige Behältnisse, wobei über eine Seitenwandung ein Eintrieb erfolgt, so dass mehrere Schlachttiere nebeneinander gleichzeitig in der jeweiligen Aufnahme 18, 20 positioniert werden können. Der gemeinsame Eintrieb führt zur Beruhigung der Schlachttiere. Sodann werden die Aufnahmen über die Eintrittsöffnung 28 durch den Schacht 12 geführt, um mittels Ballongas eine Vorbetäubung durchzuführen, ohne dass Abwehrreaktionen der Schlachttiere auftreten. Anschließend wird die Aufnahme 18, 20 über die Öffnungsabschnitte 30, 32 der Schächte 12, 14 in den Schacht 14 und damit das Gas B gefördert, durch das die erforderliche Endbetäubung erfolgt, um sodann nach Auswerfen der Schlachttiere aus der Aufnahme 18, 20 das eigentliche Schlachten vorzunehmen. Im Auswurfbereich 37 werden hierzu Boden- und Seitenwandung der Aufnahmen 18, 20 herausgeschwenkt, wie dies prinzipiell dargestellt wird. Die Schlachttiere rutschen sodann entlang einer Rampe auf ein Transportband, um anschließend in gewohnter Weise verarbeitet zu werden.

Ist in der zeichnerischen Darstellung eine Endloskette 16 dargestellt, die umlaufend innerhalb und außerhalb der Schächte 12, 14 und durch die Reinigungsanlage 26 geführt wird, so besteht auch die Möglichkeit, dass die Aufnahmen 18, 20 im Auswurfbereich 37 über eine Transfereinrichtung an ein zweites Fördermittel übergeben werden, um die Aufnahmen 18, 20 von dem Auswurfbereich 37 zum Eintriebbereich 35 mit höherer Geschwindigkeit als in den Schächten 12, 14 fördern zu können. Hierdurch bedingt sind weniger Aufnahmen 18, 20 erforderlich, um das Betäuben durchzuführen. Bei einer diesbezüglichen Konstruktion würde sodann die die Aufnahmen 18, 20 durch die Schächte 12, 14 fördernde Kette im Auswurfbereich 37 zum Eintriebbereich 35 unmittelbar geführt werden.

Bei der Verwendung von Ballongas sollte die Verweilzeit der Schlachttiere in dem Schacht 12 zwischen 60 sec und 120 sec liegen. Für das Endbetäuben, für das CO₂ oder CO₂-enhaltendes Gas benutzt wird, also in dem Schacht 14, sollten die Schlachttiere dem Gas über eine Zeit zwischen 70 sec und 150 sec ausgesetzt sein.

Die Gesamtverweilzeit in den Schächten 12, 14 sollte zwischen 150 sec und 250 sec, insbesondere zwischen 180 sec und 190 sec liegen.

## Patentansprüche

1. Verfahren zum Betäuben eines Schlachttieres, insbesondere eines Schweins, wobei das Schlachttier durch eine ein erstes Gas enthaltende erste Umgebung gefördert und vorbetäubt und sodann durch eine ein zweites Gas enthaltende zweite Umgebung zum Betäuben gefördert wird, wobei das erste Gas eine von dem zweiten Gas und von Luft abweichende Dichte aufweist,
**dadurch gekennzeichnet,**
**dass** das Schlachttier in eine Aufnahme (18, 20) eingetrieben wird, dass die Aufnahme mit dem Schlachttier durch die erste Umgebung zunächst aufwärts und dann abwärts und sodann durch die zweite Umgebung gefördert wird, wobei als erstes Gas ein Gas geringerer Dichte als Luft und als zweites Gas ein Gas höherer Dichte als Luft verwendet wird.

2. Verfahren nach Anspruch 1,
**dadurch gekennzeichnet,**
**dass** das Schlachttier während der Förderung durch das erste und zweite Gas irreversibel betäubt wird.

3. Verfahren nach Anspruch 1 oder 2,
**dadurch gekennzeichnet,**
**dass** als erstes Gas ein Helium enthaltendes Gas, insbesondere Helium-Luft-Gemisch, und/oder als zweites Gas ein CO₂ enthaltendes Gas verwendet wird.

4. Verfahren nach zumindest einem der vorhergehenden Ansprüche,
**dadurch gekennzeichnet,**
**dass** das Schlachttier von der ersten Umgebung kommend zunächst abwärts durch die zweite Umgebung und sodann aufwärts durch diese gefördert wird.

5. Verfahren nach zumindest einem der vorhergehenden Ansprüche,
**dadurch gekennzeichnet,**
**dass** mehrere Schlachttiere nebeneinander in der Aufnahme (18, 20) positioniert durch die erste und zweite Umgebung gefördert werden.

6. Verfahren nach zumindest einem der vorhergehenden Ansprüche,
**dadurch gekennzeichnet,**
**dass** das Schlachttier durch die erste Umgebung in einer Zeit t1 mit 60 sec ≤ t1 ≤ 120 sec, insbesondere 80 sec ≤ t1 ≤ 90 sec, und/oder durch die zweite Umgebung in einer Zeit t2 mit 70 sec ≤ t2 ≤ 150 sec, insbesondere 100 sec ≤ t2 ≤ 110 sec, gefördert wird, wobei insbesondere die Gesamtbetäubungszeit in der ersten und der zweiten Umgebung zwischen 150 sec und 250 sec, vorzugsweise zwischen 180 sec und 190 sec liegt.

7. Verfahren nach zumindest einem der vorhergehenden Ansprüche,
**dadurch gekennzeichnet,**
**dass** die Aufnahme (18, 20) innerhalb der ersten und zweiten Umgebung mit einem ersten Fördermittel und außerhalb dieser mit einem zweiten Fördermittel einer Geschwindigkeit gefördert wird, die größer als die des ersten Fördermittels ist.

8. Anlage zum Betäuben eines Schlachttieres, wie eines Schweins, umfassend eine Fördereinrichtung (16, 18, 20), die durch eine ein erstes Gas aufweisende erste Umgebung und eine dieser nachgeordnete ein zweites Gas aufweisende zweite Umgebung führt, wobei das erste Gas eine von dem zweiten Gas und von Luft abweichende Dichte aufweist,
**dadurch gekennzeichnet,**
**dass** die erste Umgebung eine das erste Gas einer Dichte geringer als Luft enthaltende schacht- oder säulenartige erste Einrichtung (12) umfasst, die bodenseitig offen und umfangs- und kopfseitig geschlossen ist und eine vertikal verlaufende Erstreckung aufweist, entlang der die Fördereinrichtung (16, 18, 20) geführt und im Kopfbereich der Einrichtung umgelenkt ist, und dass die zweite Umgebung eine unterhalb der ersten Einrichtung angeordnete das zweite Gas einer Dichte größer als Luft enthaltende zweite Einrichtung (14) aufweist.

9. Anlage nach Anspruch 8,
**dadurch gekennzeichnet,**
**dass** die zweite Einrichtung (14) schacht- oder säulenartig mit vertikaler Erstreckung ausgebildet ist und eine Eintrittsöffnung (31) aufweist, die überlappend zur bodenseitigen Öffnung (27) der ersten Einrichtung (12) verläuft, wobei der Überlappungsbereich (30, 32) von der Fördereinrichtung (16, 18, 20) durchsetzt ist, die ihrerseits im Bodenbereich der zweiten Einrichtung (14) umgelenkt ist.

10. Anlage nach Anspruch 8 oder 9,
**dadurch gekennzeichnet,**
**dass** der Überlappungsbereich (30) der bodenseitigen Öffnung (27) der ersten Heinrichtung (12) fördereinrichtungseintrittsseitig sowohl von der ersten Einrichtung als auch von der zweiten Einrichtung (14) begrenzt ist und von der Fördereinrichtung (16, 18, 20) durchsetzbar ist.

11. Anlage nach einem der Ansprüche 8 bis 10,
**dadurch gekennzeichnet,**
**dass** die Fördereinrichtung eine Aufnahme (18, 20) für das Schlachttier sowie zumindest ein Fördermittel (16) wie Förderkette umfasst, mittels dem die Aufnahme zumindest durch die erste und zweite Einrichtung (12, 14) förderbar ist.

12. Anlage nach zumindest einem der Ansprüche 8 bis 11,
**dadurch gekennzeichnet,**
**dass** der zweiten Einrichtung (14) fördereinrichtungsaustrittsseitig eine Auswurfeinrichtung für das Schlachttier zugeordnet ist und dass im Bereich (37) der Auswurfeinrichtung die Aufnahme (18, 20) von einem zweiten Fördermittel wie Förderkette erfassbar ist, die zum Eintrittsbereich der ersten Einrichtung (12) führt.

13. Anlage nach zumindest einem der Ansprüche 8 bis 12,
**dadurch gekennzeichnet,**
**dass** die Aufnahme (18, 20) eine Quaderform mit einer Grundfläche zum Nebeneinanderpositionieren von mehreren Schlachttieren aufweist.

14. Anlage nach zumindest einem der Ansprüche 9 bis 13,
**dadurch gekennzeichnet,**
**dass** das erste Gas Helium ist oder enthält und/oder das zweite Gas CO₂ ist oder enthält.

## Claims

1. Method for the anaesthetisation of a slaughter animal, in particular a pig, wherein the slaughter animal is conveyed through a first environment containing a gas and is pre-anaesthetised and is then conveyed through a second environment containing a second gas for anaesthetisation, wherein the first gas has a density that differs from that of the second gas and from air,
**characterised in that**
the slaughter animal is driven into a receptacle (18, 20), the receptacle is conveyed with the slaughter animal through the first environment initially upwards and then downwards and is then conveyed through the second environment, wherein the first gas is a gas of lower density than air and the second gas used is a gas of higher density than air.

2. Method according to claim 1,
**characterised in that**
the slaughter animal is irreversibly anaesthetised through the first gas and the second gas whilst being conveyed.

3. Method according to claim 1 or 2,
**characterised in that**
the first gas used is a gas containing helium, in particular a helium-air mixture, and/or that the second gas used is a gas containing CO₂.

4. Method according to at least one of the above claims,
**characterised in that**
the slaughter animal coming from the first environment is conveyed initially downwards through the second environment and then upwards through it.

5. Method according to at least one of the above claims,
**characterised in that**
a number of slaughter animals positioned next to one another in the receptacle (18, 20) are conveyed through the first and second environments.

6. Method according to at least one of the above claims,
**characterised in that**
the slaughter animal is conveyed through the first environment in a time t1 where 60 s ≤ t1 ≤ 120 s, in particular 80 s ≤ t1 ≤ 90 s, and/or through the second environment in a time t2 where 70 s ≤ t2 ≤ 150 s, in particular 100 s ≤ t2 ≤ 110 s, wherein in particular the entire anaesthetisation time in the first and second environments lies between 150 s and 250 s, preferably between 180 s and 190 s.

7. Method according to at least one of the above claims,
**characterised in that**
the receptacle (18, 20) is conveyed within the first and second environments through a first conveying means and outside of them through a second conveying means at a speed that is higher than that of the first conveying means.

8. System for the anaesthetisation of a slaughter animal, such as a pig, comprising a conveying device (16, 18, 20), which conveys the animal through a first environment containing a first gas and then through a second environment containing a second gas, wherein the first gas has a density that differs from that of the second gas and from air,
**characterised in that**
the first environment comprises a shaft-like or column-like first assembly (12), containing the first gas of density lower than air, which is open at the base and closed around its circumference and at its head and which extends in a vertical direction, along which the conveying device (16, 18, 20) is guided and turned around in the head region of the assembly, and that the second environment has a second assembly (14) arranged below the first assembly and containing the second gas of density greater than air.

9. System according to claim 8,
**characterised in that**
the second assembly (14) is formed in a shaft-like or column-like manner, extends vertically and has an entry opening (31) which extends in an overlapping manner to the base-side opening (27) of the first assembly (12), wherein the overlapping region (30, 32) is penetrated by the conveying device (16, 18, 20) which for its part is turned around in the base region of the second assembly (14).

10. System according to claim 8 or 9,
**characterised in that**
the overlapping region (30) of the base-side opening (27) of the first assembly (12) is limited on the conveying device opening side by both the first assembly and the second assembly (14) and can be penetrated by the conveying device (16, 18,20).

11. System according to one of claims 8 to 10
**characterised in that**
the conveying device comprises a receptacle (18, 20) for the slaughter animal and at least one conveying means (16) such as a conveying chain, through which the receptacle can be conveyed at least through the first and second assembly (12, 14).

12. System according to at least one of claims 8 to 11,
**characterised in that**
the second assembly (14) on the conveying device exit side is assigned an ejection device for the slaughter animal and that in the region (37) of the ejection device the receptacle (18, 20) can be grasped by a second conveying means such as a conveying chain which leads to the entrance region of the first assembly (12).

13. System according to at least one of claims 8 to 12
**characterised in that**
the receptacle (18, 20) has a rectangular shape with an area for the positioning of a number of slaughter animals next to one another.

14. System according to at least one of claims 9 to 13,
**characterised in that**
the first gas is helium or contains helium and/or the second gas is CO₂ or contains CO₂.

## Revendications

1. Procédé pour anesthésier un animal de boucherie, en particulier un porc, dans lequel l'animal de boucherie est transporté et pré-anesthésié à travers un premier milieu contenant un premier gaz, puis est transporté dans un second milieu contenant un second gaz pour y être anesthésié, le premier gaz présentant une masse volumique qui diffère de celles du second gaz et de l'air,
**caractérisé en ce**
**que** l'animal de boucherie est introduit dans un box (18, 20), que le box avec l'animal de boucherie est transporté à travers le premier milieu d'abord vers le haut, puis vers le bas, et est ensuite transporté à travers le second milieu, sachant qu'en tant que premier gaz est utilisé un gaz de masse volumique plus faible que celle de l'air et qu'en tant que second gaz est utilisé un gaz de masse volumique plus élevée que celle de l'air.

2. Procédé selon la revendication 1,
**caractérisé en ce**
**que** l'animal de boucherie est anesthésié de manière irréversible durant le transport à travers le premier et le second gaz.

3. Procédé selon la revendication 1 ou 2,
**caractérisé en ce**
**qu'**en tant que premier gaz est utilisé un gaz contenant de l'hélium, en particulier un mélange hélium-air, et/ou qu'en tant que second gaz est utilisé un gaz contenant du CO₂.

4. Procédé selon au moins une des revendications précédentes,
**caractérisé en ce**
**que** l'animal de boucherie venant du premier milieu est transporté à travers le second milieu d'abord vers le bas et ensuite vers le haut à travers ledit second milieu.

5. Procédé selon au moins une des revendications précédentes,
**caractérisé en ce**
**que** plusieurs animaux de boucherie placés côte à côte dans le box (18, 20) sont transportés à travers le premier et le second milieux.

6. Procédé selon au moins une des revendications précédentes,
**caractérisé en ce**
**que** l'animal de boucherie est transporté à travers le premier milieu pendant un temps t1 tel que 60 s ≤ t1 ≤ 120 s, en particulier 80 s ≤ t1 ≤ 90 s, et/ou à travers le second milieu pendant un temps t2 tel que 70 s ≤ t2 ≤ 150 s, en particulier 100 s ≤ t2 ≤ 110 s, sachant qu'en particulier le temps total d'anesthésie dans le premier et le second milieux est compris entre 150 s et 250 s, de préférence entre 180 s et 190 s.

7. Procédé selon au moins une des revendications précédentes,
**caractérisé en ce**
**que** le box (18, 20) à l'intérieur du premier et du second milieux est transporté par un premier moyen de transport et hors desdits milieux par un second moyen de transport dont la vitesse est supérieure à celle du premier moyen de transport.

8. Installation pour anesthésier un animal de boucherie, tel qu'un porc, comprenant un dispositif de transport (16, 18, 20), qui se déplace à travers un premier milieu présentant un premier gaz et à travers un second milieu en aval présentant un second gaz, le premier gaz présentant une masse volumique qui diffère de celles du second gaz et de l'air,
**caractérisée en ce**
**que** le premier milieu comprend un premier arrangement (12) en forme de puits ou de colonne contenant le premier gaz de masse volumique inférieure à celle de l'air, qui est ouvert au fond et fermé sur tous les côtés et au sommet et présente une extension verticale, le long de laquelle le dispositif de transport (16, 18, 20) est guidé et changé de direction dans la zone sommitale dudit arrangement, et que le second milieu présente un second arrangement (14) disposé au-dessous du premier arrangement et contenant le second gaz d'une masse volumique supérieure à celle de l'air.

9. Installation selon la revendication 8,
**caractérisée en ce**
**que** le second arrangement (14) est conçu en forme de puits ou de colonne avec une extension verticale et présente un orifice d'entrée (31), lequel s'étend en chevauchement par rapport à l'ouverture du fond (27) du premier arrangement (12), sachant que la zone de chevauchement (30, 32) est traversée par le dispositif de transport (16, 18, 20) qui est quant à lui changé de direction dans la zone du fond dudit second arrangement (14).

10. Installation selon la revendication 8 ou 9,
**caractérisée en ce**
**que** la zone de chevauchement (30) de l'ouverture du fond (27) du premier arrangement (12) est délimitée du côté de l'entrée du dispositif de transport par le premier arrangement ainsi que par le second arrangement (14) et peut être traversée par le dispositif de transport (16, 18, 20).

11. Installation selon l'une des revendications 8 à 10,
**caractérisée en ce**
**que** le dispositif de transport comprend un box (18, 20) pour l'animal de boucherie ainsi qu'au moins un moyen de transport (16), tel qu'une chaîne transporteuse, au moyen duquel le box peut être transporté au moins à travers le premier et le second arrangements (12, 14).

12. Installation selon au moins une des revendications 8 à 11 précédentes,
**caractérisée en ce**
**que** du côté de la sortie du dispositif de transport, un dispositif d'éjection pour l'animal de boucherie est associé au second arrangement (14), et que dans la zone (37) du dispositif d'éjection, le box (18, 20) peut être saisi par un second moyen de transport, tel qu'une chaîne transporteuse, lequel mène vers la zone d'entrée du premier arrangement (12).

13. Installation selon au moins une des revendications 8 à 12 précédentes,
**caractérisée en ce**
**que** le box (18, 20) présente une forme parallélépipédique avec une surface de base prévue pour placer côte à côte plusieurs animaux de boucherie.

14. Installation selon au moins une des revendications 9 à 13 précédentes,
**caractérisée en ce**
**que** le premier gaz est ou contient de l'hélium et/ou que le second gaz est ou contient du CO₂.
